# EUROPÄISCHE PATENTSCHRIFT

(11) **EP 3 956 630 B1**
(45) Veröffentlichungstag und Bekanntmachung des Hinweises auf die Patenterteilung: **30.08.2023**
(21) Anmeldenummer: 21731916.9
(22) Anmeldetag: 07.05.2021
(51) Int. Cl.: G01B 11/02, G01B 21/04, G03B 7/08, G03B 13/20

(54) **OPTISCHER ABSTANDSSENSOR MIT BELICHTUNGSREGELUNG SOWIE ENTSPRECHENDES VERFAHREN**
OPTICAL DISTANCE SENSOR WITH EXPOSURE CONTROL AND CORRESPONDING METHOD
CAPTEUR OPTIQUE DE DISTANCE AVEC CONTRÔLE DE L'EXPOSITION ET PROCÉDÉ CORRESPONDANT

(30) Priorität: 07.07.2020 DE 102020208526; 20.07.2020 DE 102020209065
(43) Veröffentlichungstag der Anmeldung: 23.02.2022
(73) Patentinhaber: Micro-Epsilon Optronic GmbH, 01465 Langebrück (DE)
(72) Erfinder: PRUSSEIT, Steffen, 01097 Dresden (DE); TOBESCHAT, Lars, 01069 Dresden (DE)
(74) Vertreter: Ullrich & Naumann PartG mbB
(86) Internationale Anmeldenummer: PCT/DE2021/200061
(87) Internationale Veröffentlichungsnummer: WO 2022/008009

(56) Entgegenhaltungen:
- US-A1- 2012 113 435
- US-B1- 6 822 681

## Beschreibung

Die Erfindung betrifft einen optischen Abstandssensor mit Belichtungsregelung sowie ein Verfahren zum Regeln eines optischen Abstandssensors.

Optische Abstandssensoren haben sich in der Messtechnik als robuste und vielfältig einsetzbare Sensoren etabliert. Hierbei wird mittels einer Lichtquelle ein Beleuchtungslichtstrahl erzeugt und auf ein Messobjekt gelenkt. Der Beleuchtungslichtstrahl ruft an oder bei dem Messobjekt einen Messlichtstrahl hervor, in vielen Fällen durch Reflexion des Beleuchtungslichtstrahls an einer Oberfläche des Messobjekts. Der Messlichtstrahl wird mit einem Detektor erfasst und aus Messwerten des Detektors auf einen Abstand zwischen Sensor und Messobjekt geschlossen. Als beispielhafte Ausgestaltung derartiger optischer Sensoren sei auf Triangulationssensoren, konfokal-chromatisch messende Abstandssensoren und interferometrische Abstandssensoren verwiesen.

Bei einem Triangulationssensor bilden der Sensor, der Beleuchtungslichtstrahl und der Messlichtstrahl ein Dreieck. Der Detektor ist hierbei meist durch einen Linien- oder Flächendetektor gebildet. Ein gemessener Abstand ergibt sich aus einem beleuchteten Punkt auf dem Detektor sowie der Sensorgeometrie.

Bei einem konfokal-chromatisch messenden Abstandssensor wird bei dem multichromatischen Beleuchtungslichtstrahl bewusst eine chromatische Aberration, meist eine longitudinale chromatische Aberration, hervorgerufen. Der spektrale Anteil, dessen Brennpunkt nahe bei der reflektierenden Oberfläche des Messobjekts angeordnet ist, erzeugt einen Peak in dem Spektrum des Messlichtstrahls, wodurch auf den Abstand der Oberfläche geschlossen werden kann. Der Detektor ist in diesem Fall ein Spektrometer.

Bei interferometrischen Sensoren werden der Beleuchtungslichtstrahl und der Messlichtstrahl überlagert und dadurch eine Interferenz erzeugt. Abstandsänderungen zwischen Sensor und Messobjekt führen zu Änderungen des Interferenzmusters, dessen Auswertung Rückschlüsse auf Abstandsänderung zulässt.

Für eine gleichbleibend hohe Messgenauigkeit ist es von Bedeutung, dass die Anzahl von Photonen, die mit dem Messlichtstrahl pro Zeiteinheit bei dem Detektor ankommt, in einem relativ engen Toleranzbereich liegt, beispielsweise zwischen 75% und 85% einer Sättigungsgrenze des Detektors oder zwischen 60% und 80% der Sättigungsgrenze oder zwischen 85% und 95% der Sättigungsgrenze. Bei einer zu hohen Photonenanzahl pro Zeiteinheit können Detektorelemente in Sättigung gehen, sodass ein beleuchteter Punkt auf dem Detektor nicht mehr scharf abgrenzbar ist. Bei einer zu niedrigen Photonenanzahl pro Zeiteinheit kann das erzeugte Messsignal nahe einer Detektionsschwelle liegen und im Rauschen untergehen. Ein relativ enger Toleranzbereich sichert damit eine gute Nutzung der Sensordynamik und ein gutes Signal-zu-Rausch-Verhältnis (SNR - Signal to Noise Ratio).

Problematisch ist, dass die Anzahl bei dem Detektor ankommender Photonen von einer Vielzahl von Randbedingungen abhängt. Neben der Intensität des Beleuchtungslichtstrahls und dessen Pulsdauer hat vor allem die Reflektivität des Messobjekts eine wichtige Auswirkung auf die Anzahl ankommender Photonen. Die Reflektivität ist beispielsweise von der Oberflächenbeschaffenheit des Messobjekts, der Ausrichtung der Oberfläche relativ zu dem Beleuchtungslichtstrahl und dessen Farbe abhängig. Raue Oberflächen oder Objektkanten erzeugen einen deutlich stärker gestreuten Messlichtstrahl als glattere Oberflächen. Dunkle Oberflächen absorbieren Teile des Beleuchtungslichtstrahls und erzeugen damit einen Messlichtstrahl mit niedrigerer Intensität als helle Oberflächen. Diese Beispiele zeigen, dass der Messlichtstrahl selbst bei konstantem Beleuchtungslichtstrahl stark variieren kann. Dies bedeutet, dass eine Belichtungsregelung erforderlich ist.

Eine besondere Herausforderung stellt die Vermessung bewegter Messobjekte dar, beispielsweise auf einem Fließband, da sich hierbei die Reflektivität rasch ändern kann. Dies erfordert eine besonders rasche Belichtungsregelung. In der Zeit bis zum Wiedererreichen eines stabilen Regelzustandes ist die Varianz der Messwerte - und damit der einhergehende Fehler - zwischenzeitlich sehr hoch und nimmt anschließend exponentiell ab. Bei einer Echtzeitmessung werden dadurch zahlreiche Messwerte mit einem hohen Messfehler erzeugt und ausgegeben.

Für das Erzielen einer möglichst idealen Belichtung des Detektors ist aus der Praxis eine Anpassung der Belichtungsdauer des Detektors bekannt. Während der Belichtungsdauer sammelt der Detektor Photonen auf, die mittels Messlichtstrahl und sonstigen Lichts (beispielsweise Hintergrundlicht) bei dem Detektor ankommen. Abhängig von der Anzahl aufgesammelter Photonen ändert sich eine Eigenschaft des Detektors, beispielsweise eine in einem Detektorelement gespeicherte Ladungsmenge. Am Ende der Belichtungsdauer wird der Detektor ausgelesen und zurückgesetzt. Die Summe aus Belichtungsdauer und Auslesedauer definiert eine maximal mögliche Bildrate. Die Bildrate (englisch frame rate) definiert die Anzahl von Einzelbildern, die pro Zeitspanne erzeugt werden.

Bei einer bekannten Variante der Anpassung der Belichtungsdauer wird eine feste Bildrate eingestellt und innerhalb dieser Bildrate die Belichtungsdauer (englisch shutter time) in Abhängigkeit der Reflektivität des Messobjektes angepasst. Dies hat den Vorteil, dass ein nachgeschaltetes System synchron mit Messwerten versorgt wird.

Bei einer anderen bekannten Variante wird eine flexible Bildrate angewendet, die sich aus einer flexiblen Belichtungsdauer in Abhängigkeit der Reflektivität des Messobjekts und einer konstanten Auslesedauer zusammensetzt. Der Vorteil liegt hier in einer sehr hohen Bildrate mit dem Nachteil, dass ein nachgeschaltetes System Messwerte asynchron und damit unrhythmisch erhält und insbesondere bei bewegten Objekten ein räumlicher Messbezug nur schwer möglich ist.

Der Nachteil bei beiden Varianten ist die Tatsache, dass das Einschwingen der Regelung lange dauert. Dies ist dem Umstand geschuldet, dass die Regelung erst mit Zeitverzug wirkt. In einem ersten Zeitfenster wird ein Messwert durch den Detektor aufgenommen, in einem zweiten Zeitfenster aus einem ausgelesenen Messwert eine neue Belichtungsdauer berechnet. Dies bedeutet, dass die neue Belichtungsdauer erst in einem dritten Zeitfenster zur Anwendung kommt. Die Belichtungsregelung eilt damit immer der idealen Belichtungsdauer um mindestens zwei Zeitfenster hinterher, was sich insbesondere bei starken Änderungen der Reflektivität negativ auswirkt. Da sich bei unter- bzw. überbelichteten Detektorelementen ein schlechtes SNR ergibt, führt dies zu einer großen Streubreite und damit Messunsicherheit des Messsystems.

Ein anderer Ansatz ist aus der EP 3 165 874 A1 bekannt. Zur Vermeidung einer Sättigung des Detektors werden mehrere Sättigungsstufen eingeführt. Der Detektor wird in einer vordefinierten Detektionssequenz beleuchtet, wobei die Detektionssequenz in mehrere Untersequenzen eingeteilt ist. In jeder Untersequenz ist eine höhere Sättigungsgrenze definiert als in der vorhergehenden Untersequenz. Dabei sind die Beleuchtungsdauern und Sättigungsgrenzen derart festgelegt, dass die Ladung am Ende der Detektionssequenz in jedem Pixel unterhalb der Sättigung liegt. Nachteilig hieran ist, dass spezielle Detektoren erforderlich sind.

Des Weiteren sind aus der US 6 822 681 B1 ein optischer Abstandssensor mit Belichtungsregelung sowie ein entsprechendes Verfahren bekannt, wonach der Abstandssensor eine Lichtquelle, einen Detektor, eine Messsteuerung zum Steuern des Detektors und eine Auswerteeinrichtung aufweist.

Weiterhin sind aus der US 2012/0113435 A1 ein solcher optischer Abstandssensor sowie ein entsprechendes Verfahren bekannt.

Der vorliegenden Erfindung liegt die Aufgabe zugrunde, einen optischen Abstandssensor und ein Verfahren der eingangs genannten Art derart auszugestalten und weiterzubilden, dass eine rasche Regelung der Belichtung des Detektors bei gleichzeitig möglichst geringem Einfluss auf die Qualität erzeugter Abstandsmesswerte erreichbar ist.

Erfindungsgemäß wird die voranstehende Aufgabe durch die Merkmale des Anspruchs 1 gelöst. Danach umfasst der in Rede stehende Abstandssensor:
eine Lichtquelle zum Erzeugen eines Beleuchtungslichtstrahls und zum Lenken des Beleuchtungslichtstrahls auf ein Messobjekt,
einen Detektor zum Erfassen eines durch Reflexion des Beleuchtungslichtstrahls an dem Messobjekt hervorgerufenen Messlichtstrahls,
eine Messsteuerung zum Steuern des Detektors bei einem Erfassen des Messlichtstrahls und bei einem Auslesen von Messwerten,
eine Auswerteeinheit, die in einer Phase eines Messbetriebs zum Auswerten von Messwerten des Detektors zum Ermitteln eines Abstands zwischen dem Abstandssensor und dem Messobjekt ausgebildet ist, und
einen Regler, der die Lichtquelle, den Detektor und/oder die Messsteuerung derart ansteuert, dass sich eine empfangene Lichtmenge, die während einer Belichtungsdauer von dem Detektor oder von einem Teilbereich des Detektors erfasst wird, in einem Sollbereich befindet oder sich diesem Sollbereich annähert,
wobei der Abstandssensor dazu ausgebildet ist, sowohl in Phasen des Messbetriebs als auch in zwischen den Phasen des Messbetriebs ausgebildeten Messpausen einen Beleuchtungslichtstrahl auszusenden und einen Messlichtstrahl zu erfassen und mittels des Reglers auszuwerten,
wobei der Abstandssensor weiterhin dazu ausgebildet ist:
   - zwischen zwei aufeinanderfolgenden Phasen eines Messbetriebs mindestens eine Zwischenmessung durchzuführen, wobei bei einer Zwischenmessung ein Beleuchtungslichtstrahl erzeugt und ein Messlichtstrahl erfasst wird, ohne dass ein Abstandswert ermittelt wird, wobei die bei einer Zwischenmessung ausgelesene Messwerte des Detektors lediglich für die Regelung der empfangenen Lichtmenge ausgewertet werden und nicht für das Ermitteln eines Abstands genutzt werden, und
   - bei mehreren Zwischenmessungen vor Durchführen einer möglichen Zwischenmessung zu prüfen, ob eine durch den Regler ermittelte Regeldifferenz oberhalb eines ersten Schwellwerts liegt und damit eine weitere Zwischenmessung erforderlich ist oder ob eine durch den Regler ermittelte Regeldifferenz unterhalb eines zweiten Schwellwerts liegt und damit eine weitere Zwischenmessung entbehrlich ist.

Hinsichtlich eines Verfahrens ist die voranstehende Aufgabe durch die Merkmale des nebengeordneten Anspruchs 7 gelöst. Danach nutzt das Verfahren einen Abstandssensor, der eine Lichtquelle und einen Detektor umfasst und mittels dessen in Phasen eines Messbetriebs ein Abstand zu einem Messobjekt ermittelt wird. Dieses Verfahren umfasst die Schritte:
Erzeugen eines Beleuchtungslichtstrahls durch die Lichtquelle und Lenken des Beleuchtungslichtstrahls auf ein Messobjekt,
Erfassen eines durch Reflexion des Beleuchtungslichtstrahls an dem Messobjekt hervorgerufenen Messlichtstrahls mittels des Detektors,
Auslesen von Messwerten des Detektors, wobei das Auslesen durch eine Messsteuerung gesteuert wird,
Ermitteln einer empfangenen Lichtmenge, die während einer Belichtungsdauer von dem Detektor oder von einem Teilbereich des Detektors erfasst wird,
wobei sowohl in Phasen des Messbetriebs als auch in zwischen den Phasen des Messbetriebs ausgebildeten Messpausen ein Beleuchtungslichtstrahl erzeugt und auf das Messobjekt gelenkt und ein Messlichtstrahl erfasst und mittels eines Reglers ausgewertet wird,
wobei die Lichtquelle, der Detektor und/oder die Messsteuerung mittels des Reglers derart angesteuert wird/werden, dass sich die empfangene Lichtmenge in einem Sollbereich befindet oder sich dem Sollbereich annähert,
wobei zwischen zwei aufeinanderfolgenden Phasen eines Messbetriebs mindestens eine Zwischenmessung durchgeführt wird, wobei bei einer Zwischenmessung ein Beleuchtungslichtstrahl erzeugt und ein Messlichtstrahl erfasst wird, ohne dass ein Abstandswert ermittelt wird, wobei die bei einer Zwischenmessung ausgelesene Messwerte des Detektors lediglich für die Regelung der empfangenen Lichtmenge ausgewertet werden und nicht für das Ermitteln eines Abstands genutzt werden, und
wobei bei mehreren Zwischenmessungen vor Durchführen einer möglichen Zwischenmessung geprüft wird, ob eine durch den Regler ermittelte Regeldifferenz oberhalb eines ersten Schwellwerts liegt und damit eine weitere Zwischenmessung erforderlich ist oder ob eine durch den Regler ermittelte Regeldifferenz unterhalb eines zweiten Schwellwerts liegt und damit eine weitere Zwischenmessung entbehrlich ist.

Erfindungsgemäß ist zunächst erkannt worden, dass in der Praxis selten die maximal mögliche Abtastrate eines Abstandssensors benötigt und/oder genutzt wird. Vielmehr werden Abstandssensoren in der Praxis häufig mit einer reduzierten Abtastrate betrieben, sodass zwischen Phasen eines Messbetriebs jeweils mehr oder weniger ausgeprägte Messpausen entstehen. Zur Beschleunigung der Regelung wäre es denkbar, die Abtastrate zu erhöhen und damit die Messpausen zu reduzieren. Dies führt aber zu einem unnötigen Aufwand, der wertvolle Ressourcen verschwendet und den Energieverbrauch negativ beeinflusst. Sofern die Abstandswerte nicht unmittelbar wieder verworfen werden, müssten diese abgespeichert werden, was den meist sehr beschränkt vorhandenen Speicherplatz erheblich belasten würde. Dennoch ist erkannt worden, dass die Nutzung der Messpausen ein effektives Mittel ist, um die Regelung zu beschleunigen.

Erfindungsgemäß wird nicht nur in einer Phase des Messbetriebs ein Beleuchtungslichtstrahl ausgesandt, sondern auch bei einer oder mehreren Zwischenmessungen während einer Messpause, die zwischen aufeinanderfolgenden Phasen des Messbetriebs ausgebildet ist. Bei einer Zwischenmessung wird ein Beleuchtungslichtstrahl ausgesendet, ein Messlichtstrahl erfasst und der Detektor ausgelesen, wie dies auch bei einer Phase des Messbetriebs erfolgen würde. Allerdings werden ausgelesene Messwerte des Detektors lediglich für eine Regelung ausgewertet und nicht für das Ermitteln eines Abstands genutzt. Dies vermeidet unnötigen Rechenaufwand durch eine abstandsbezogene Auswertung der Messwerte. Durch die Zusatzfunktion der Zusatzmessungen können für die Regelung zusätzliche Messwerte gewonnen werden, die auch in Messpausen ein Nachführen der Regelung ermöglichen und dennoch ein Verschwenden von Ressourcen vermeiden können. Die Regelung erreicht trotz der weiterhin vorhandenen Zeitverzögerung zwischen Erzeugen und Nutzen eines Messwerts schneller einen stabilen Regelzustand, da Anpassungen der Regelung mit höherer Rate erfolgen, ohne dass die Berechnung nicht benötigter Abstandswerte erforderlich wäre.

Ein erfindungsgemäßer Abstandssensor, der dieses Grundkonzept verwirklicht, umfasst eine Lichtquelle, einen Detektor, eine Messsteuerung, eine Auswerteeinheit und einen Regler. Die Lichtquelle erzeugt einen Beleuchtungslichtstrahl und lenkt diesen auf ein Messobjekt. Der Detektor erfasst einen Messlichtstrahl, der durch Reflexion des Beleuchtungslichtstrahls an einer Oberfläche des Messobjekts hervorgerufen worden ist. Bei dem Erfassen des Messlichtstrahls erzeugt der Detektor einen Messwert, der aus dem Detektor ausgelesen werden kann. Der Messwert ist üblicherweise für die Anzahl von Photonen repräsentativ, die während einer Belichtungsdauer bei dem Detektor ankommen. Der Messwert repräsentiert damit eine empfangene Lichtmenge, die während der Belichtungsdauer von dem Detektor oder einem Teilbereich des Detektors erfasst worden ist. Der Messwert kann dabei ein Skalar oder eine eindimensionale oder mehrdimensionale Größe sein.

Die Auswerteeinheit ist zum Bestimmen eines Abstands ausgebildet, indem in einer Phase des Messbetriebs die Messwerte des Detektors ausgewertet werden. Dies kann, beispielsweise bei einem Triangulationssensor, das Bestimmen eines Lichtmengenmaximums und das Zuordnen des Lichtmengenmaximums zu einem Abstand umfassen.

Die Messsteuerung steuert den Detektor, insbesondere beim Erfassen eines Messlichtstrahls und beim Auslesen von Messwerten. Dies kann beispielsweise das Aktivieren des Detektors zum Erfassen eines Lichtstrahls und das Auslösen eines Auslesens eines Messwerts aus dem Detektor umfassen.

Der Regler steuert Bestandteile des Abstandssensors derart an, dass sich eine empfangene Lichtmenge, die während einer Belichtungsdauer von dem Detektor oder von einem Teilbereich des Detektors erfasst wird, in einem Sollbereich befindet oder - sofern sie sich nicht in dem Sollbereich befindet - sich dem Sollbereich annähert und ihn vorzugsweise erreicht. Diese angesteuerten Bestandteile können die Lichtquelle, den Detektor und/oder die Messsteuerung umfassen.

Die vorliegende Erfindung kann im Zusammenhang mit verschiedensten optischen Abstandsmessverfahren eingesetzt werden. Wesentlich ist, dass bei dem optischen Abstandsmessverfahren ein Beleuchtungslichtstrahl ausgesendet und ein Messlichtstrahl empfangen und ausgewertet wird. Diese Anforderung ist bei vielen optischen Abstandsmessverfahren erfüllbar. In einer Ausgestaltung arbeitet der erfindungsgemäße Abstandssensor nach dem Prinzip eines Triangulationssensors, wobei eine punkt- oder eine linienförmige Beleuchtung des Messobjekts verwendet werden kann. In einer anderen Ausgestaltung arbeitet der erfindungsgemäße Abstandssensor nach dem Prinzip eines konfokal-chromatisch messenden Abstandssensors. In einer noch weiteren Ausgestaltung arbeitet der erfindungsgemäße Abstandssensor nach dem Prinzip eines interferometrischen Abstandssensors.

Auch die Lichtquelle des Abstandssensors kann auf verschiedenste Weise gebildet sein. Als beispielhafte Ausgestaltungen sei auf eine LED (Licht Emittierende Dioden), eine SLED (Superlumineszenz LED), einen Laser, insbesondere einen Halbleiterlaser, einen Supercontinuum-Laser oder eine Swept-Source-Quelle verwiesen, um lediglich einige denkbare Lichtquellen zu nennen. Je nach Ausgestaltung des Abstandssensors kann der durch die Lichtquelle erzeugte Beleuchtungslichtstrahl monochromatisch oder polychromatisch sein. Dabei kann die Lichtquelle neben dem eigentlichen Lichterzeuger noch optische Mittel umfassen, mit denen der Beleuchtungslichtstrahl geformt, gelenkt und/oder auf sonstige Weise beeinflusst wird. Beispielhaft sei hierzu auf Linsen, Strahlteiler, Spiegel und Prismen verwiesen.

Die Auswerteeinheit, Messsteuerung und/oder der Regler können auf verschiedenste Weise implementiert sein. In einer Ausgestaltung sind diese Einheiten durch Hardware implementiert. In einer anderen Ausgestaltung sind diese Einheiten durch eine Kombination aus Software und Hardware implementiert. Dabei kann die Hardware beispielsweise durch einen Mikroprozessor, einen Mikrocontroller, einen DSP (Digitaler Signal Prozessor) und/oder einen FPGA (Field Programmable Gate Array) gebildet sein, auf dem ein Software-Programm abgearbeitet wird. Hierzu kann ein RAM (Random Access Memory), ein ROM (Read Only Memory), Ein- und Ausgabeschnittstellen, Analog-Digital-Wandler oder weitere Peripherie-Geräte genutzt werden.

Der Regler und/oder die Messsteuerung kann/können dazu ausgebildet sein, der Auswerteeinheit eine Phase eines Messbetriebs oder eine Zwischenmessung zu signalisieren. Auf diese Weise könnte der Auswerteeinheit signalisiert werden, ob eine Auswertung eines Messwerts hinsichtlich eines Abstands durchgeführt werden soll oder nicht. Diese Information kann an die Auswerteeinheit mittels eines Triggereingangs übergeben werden. Es ist auch denkbar, dass ein Bit in einem Register gesetzt wird, mit dem der Auswerteeinheit eine Verarbeitung vorhandener Messwerte signalisiert wird.

Der "Sollbereich", innerhalb der die empfangene Lichtmenge liegen soll, kann auf verschiedene Weise definiert sein. Ziel bei der Definition des Sollbereichs dürfte vielfach sein, dass der Detektor oder ein Teilbereich des Detektors nicht in Sättigung geht. Wie konkret dies erreicht wird, ist weitgehend unerheblich. Es kann sich anbieten, dass der Sollbereich auf eine Sättigungsgrenze normiert ist. Dabei kann der Sollbereich als ein Bereich von Prozentzahlen angegeben sein, beispielsweise zwischen 75% und 85% einer Sättigungsgrenze des Detektors oder zwischen 60% und 80% der Sättigungsgrenze oder zwischen 85% und 95% der Sättigungsgrenze, um lediglich einige denkbare Beispiele zu nennen. Der Sollbereich kann aber auch mit einem Sollwert und einer Streubandbreite definiert sein, beispielsweise 80% ± 5% oder 70% ± 10% oder 90% ± 5%. Wie konkret der Sollbereich definiert ist, dürfte von der konkreten Ausgestaltung des Detektors und dessen Verhalten abhängen.

Dabei kann auch berücksichtigt werden, dass der Detektor eventuell nicht ausschließlich den Messlichtstrahl erfasst. So ist es bei einzelnen Messsituationen denkbar, dass Hintergrundlicht in den Detektor fällt, das durch den Einsatz des Abstandssensors in einem beleuchteten Raum vorhanden ist und nicht ausreichend gut ausgeblendet werden kann.

Für die vorliegende Erfindung ist es nicht entscheidend, wie ausgeprägt die Messpausen sind. Es sollte lediglich möglich sein, zwischen Phasen des Messbetriebs mindestens eine Zwischenmessung zu erreichen. Da gebräuchliche Detektoren üblicherweise eine maximale Bildrate aufweisen, würde dies bedeutet, dass die tatsächlich genutzte Bildrate unterhalb der maximal möglichen Bildrate liegt. Dabei kann die maximal mögliche Bildrate durch die Summe aus Belichtungsdauer und Auslesedauer bestimmt sein. Die tatsächlich genutzte Bildrate definiert, mit welcher Häufigkeit pro Zeiteinheit ein Abstand ermittelt wird. In einer Ausgestaltung liegt die tatsächlich genutzte Bildrate relativ zu der maximal möglichen Bildrate bei 50% oder darunter. Bei einer maximal möglichen Bildrate von beispielsweise 10 kHz würde dies bedeuten, dass die tatsächlich genutzte Bildrate bei 5 kHz oder darunter liegt. In einer anderen Ausgestaltung liegt die tatsächlich genutzte Bildrate relativ zu der maximal möglichen Bildrate bei 10% oder darunter. Bei einer maximal möglichen Bildrate von 10 kHz würde dies bedeuten, dass die tatsächlich genutzte Bildrate bei 1 kHz oder darunter liegt.

In einer Weiterbildung ist die Messsteuerung dazu ausgebildet, Messwerte des Detektors asynchron auszulesen. Dies führt zu einem höheren Freiheitsgrad bei der Steuerung der Komponenten des Abstandssensors.

In einer anderen Weiterbildung ist die Messsteuerung dazu ausgebildet, Messwerte des Detektors synchron auszulesen. Dabei können die Messwerte mit einem gleichbleibenden zeitlichen Abstand aus dem Detektor ausgelesen werden.

In einer noch anderen Weiterbildung können ein synchrones und ein asynchrones Auslesen kombiniert werden. Dies kann in einer Ausgestaltung bedeuten, dass die Messwerte, die für eine Abstandbestimmung durch die Auswerteeinheit ausgewertet werden, synchron mit einem gleichbleibenden zeitlichen Abstand erfolgt, während Zwischenmessungen in einer Messpause asynchron erfolgen. Dies bietet den Vorteil, dass die Abstandswerte einen definierten zeitlichen Abstand zueinander haben, insbesondere für eine Verwendung in einem nachgelagerten System, das die gewonnenen Abstandswerte nutzt, und dass für die Regelung mittels Zwischenmessungen ein hoher Freiheitsgrad besteht.

In einer Ausgestaltung ist die Messsteuerung dazu ausgebildet, abhängig von einer Belichtungsdauer einen Belichtungsstart festzulegen, bei dem ein Erfassen des Messlichtstrahls gestartet wird. Dies kann bedeuten, dass der Belichtungsstart so gewählt wird, dass der Ablauf der Belichtungsdauer und damit das Auslesen eines Messwerts zu einem definierten Auslesezeitpunkt erfolgt. Ein derartiger definierter Auslesezeitpunkt kann beispielsweise durch ein Zeitraster definiert sein, das ein synchrones Auslesen von Messwerten festlegt. Durch eine derartige Definition des Belichtungsstarts kann auch bei veränderlichen Belichtungsdauern ein definierter Auslesezeitpunkt erreicht werden.

In einer Ausgestaltung ist der Regler zum Beeinflussen einer Intensität des Beleuchtungslichtstrahls ausgebildet, um die empfangene Lichtmenge zu regeln. Dabei kann die Intensität des Beleuchtungslichtstrahls ein Momentanwert sein. Bei einem gepulsten Beleuchtungslichtstrahl könnte dieser Wert die Intensität des Lichtstrahls während eines aktivierten Beleuchtungslichtstrahls definieren. Dabei könnte der Beleuchtungslichtstrahl zwischen diesem Intensitätswert und einer Intensität von Null wechseln.

In einer Ausgestaltung ist der Regler zum Beeinflussen einer Impulsdauer des Beleuchtungslichtstrahls ausgebildet, um die empfangene Lichtmenge zu regeln.

Die Impulsdauer definiert, wie lange der Beleuchtungslichtstrahl eingeschaltet ist. Je länger die Impulsdauer ist, desto länger kann ein Messlichtstrahl durch den Beleuchtungslichtstrahl hervorgerufen werden. Auf diese Weise kann die empfangene Lichtmenge mit einfachen Mitteln beeinflusst werden.

In einer Ausgestaltung ist der Regler zum Beeinflussen eines Belichtungsstarts des Detektors ausgebildet, um die empfangene Lichtmenge zu regeln. Das Beeinflussen des Belichtungsstarts kann das Aufsammeln von empfangenen Photonen optimieren. So kann beispielsweise bei einem gepulsten Beleuchtungslichtstrahl der Belichtungsstart mit einem Puls synchronisiert werden. Auf diese Weise kann gewährleistet werden, dass auf definierte Weise Photonen aufgesammelt werden.

In einer Ausgestaltung ist der Regler zum Beeinflussen der Belichtungsdauer des Detektors ausgebildet, um die empfangene Lichtmenge zu regeln. Unter der Annahme, dass über die gesamte Belichtungsdauer ein Messlichtstrahl ankommt, kann durch Erhöhen der Belichtungsdauer die empfangene Lichtmenge erhöht werden bzw. durch Reduzieren der Belichtungsdauer die empfangene Lichtmenge reduziert werden. Auf diese Weise lässt sich die empfangene Lichtmenge sehr einfach beeinflussen.

Die vorgenannten Ausgestaltungen zum Regeln der empfangenen Lichtmenge können beliebig kombiniert werden. Es kann auch eine Fehlererkennung eingebaut sein, die bei einem vollständigen Fehlen eines Messlichtstrahls die Versuche abbricht, die empfangene Lichtmenge zu steigern. In diesem Fall kann eine Fehlplatzierung des Abstandssensors und/oder des Messobjekts vorliegen, sodass der Beleuchtungslichtstrahl keinen empfangbaren Messlichtstrahl hervorruft.

In einer Ausgestaltung umfasst der Abstandssensor einen Auslesespeicher, der zum Speichern ausgelesener Messwerte des Detektors ausgebildet ist. Dabei kann zwischen Detektor und Auslesespeicher ein Analog-Digital-Wandler angeordnet sein, der analoge Messwerte des Detektors in Digitalwerte wandelt. Der Auslesespeicher kann als Zwischenspeicher von Messwerte dienen. Dadurch kann der Detektor bereits eine nächste Messung durchführen, während andere Komponenten, beispielsweise der Regler oder die Auswerteeinheit, die zwischengespeicherten Messwerte der vorangegangenen Messung auslesen und/oder verarbeiten. Dabei bietet es sich an, wenn der Auslesespeicher so groß ist, dass zumindest ein Satz von Messwerten gespeichert werden kann. Je nach Art der Auswertung kann es aber auch sinnvoll sein, wenn in dem Auslesespeicher mehrere Sätze von Messwerten gespeichert werden können. Dies würde erlauben, die Messwerte mehrerer Messungen zwischenzuspeichern.

In einer Ausgestaltung umfasst der Detektor mehrere Detektorelemente. Die mehreren Detektorelemente können auf verschiedenste Weise gebildet sein. Diese Detektorelemente dürften eine gewisse örtliche Auflösung erlauben. Dies kann beispielsweise durch voneinander getrennte Detektorelemente erreicht werden, die unabhängig voneinander einfallendes Licht erfassen können. Die mehreren Detektorelemente können verschiedentlich angeordnet sein. Vorzugsweise sind die Detektorelemente linienförmig oder flächig angeordnet. Bei einem Detektor mit mehreren Detektorelementen dürfte dann der Messwert des Detektors ein- oder mehrdimensional sein, also beispielsweise durch einen Vektor oder eine Matrix gebildet sein.

Dabei kann ein Teilbereich, für den eine empfangene Lichtmenge ermittelt wird, durch ein Detektorelement gebildet sein. Bei der Auswertung dieses Teilbereichs kann der Regler die Detektorelemente ermitteln, die einen maximalen Messwert über alle Messwerte der Detektorelemente liefern. Die Lichtmenge, die bei den Detektorelementen mit maximalem Messwert empfangen wird, kann durch den Regler in den Sollbereich geregelt werden.

Erfindungsgemäß wird zwischen zwei aufeinanderfolgenden Phasen eines Messbetriebs mindestens eine Zwischenmessung durchgeführt, wobei bei einer Zwischenmessung ein Beleuchtungslichtstrahl erzeugt und ein Messlichtstrahl erfasst wird, ohne dass ein Abstandswert ermittelt wird.

Erfindungsgemäß, wenn mehrere Zwischenmessungen in einer Messpause möglich wären, wird das Durchführen der nächsten möglichen Zwischenmessung von der voraussichtlichen Notwendigkeit einer weiteren Regelung abhängig gemacht. Wenn eine durch den Regler ermittelte Regeldifferenz oberhalb eines ersten Schwellwerts liegt, wird eine weitere Zwischenmessung und eine weitere Anpassung erforderlich. Wenn eine durch den Regler ermittelte Regeldifferenz unterhalb eines zweiten Schwellwerts liegt, wird eine weitere Zwischenmessung entbehrlich und daher übersprungen. Dabei kann der erste Schwellwert größer oder gleich dem zweiten Schwellwert sein. Auf diese Weise kann die Anzahl von Zwischenmessungen gering gehalten werden.

In einer Weiterbildung kann die Anzahl übersprungener Zwischenmessungen limitiert sein. Wenn eine maximale Anzahl übersprungener Zwischenmessungen erreicht oder überschritten ist, kann eine Zwischenmessung erzwungen werden. Denkbar wäre beispielsweise, diese maximale Anzahl auf 5 oder auf 10 übersprungene Zwischenmessungen zu setzen. Auf diese Weise kann auch bei einer Änderung der Reflektivität ein zeitnahes Nachregeln erreicht werden.

In einer Weiterbildung kann eine Zwischenmessung zumindest dann durchgeführt und nicht übersprungen werden, wenn eine nächste Phase eines Messbetriebs "nahe" herangerückt ist. Was dieses "nahe" konkret bedeutet, wird von dem jeweiligen Anwendungsfall abhängen. Wenn sehr viele Zwischenmessungen vorgesehen sind und/oder sich die Reflektivität häufig sprungartig ändert, so bieten sich mehrere Taktfenster unmittelbar vor einer Phase des Messbetriebs für das Durchführen weiterer Zwischenmessungen an. In einer Weiterbildung wird zumindest eine letzte Zwischenmessung einer Messpause in einem Taktfenster unmittelbar vor einer Phase des Messbetriebs vorgenommen und nicht übersprungen. Auf diese Weise können eventuelle Abweichungen der empfangenen Lichtmenge von dem Sollbereich ausgeregelt werden.

In einer Weiterbildung kann eine Messpause nicht nur für ein Regeln der Belichtung, sondern auch für ein Anpassen einer Messwertverbesserung genutzt werden. Daher können zwischen zwei aufeinanderfolgenden Phasen des Messbetriebs Informationen für eine Messwertverbesserung erfasst werden. Dabei kann ein Taktfenster, das eigentlich für eine Zwischenmessung genutzt werden würde, für das Ermitteln von Informationen für die Messwertverbesserung genutzt werden. Dieses Taktfenster kann auch bei ausreichend niedriger Regeldifferenz durch Überspringen einer Zwischenmessung "frei" geworden sein. Damit lässt sich die Messpause noch weiter für eine Verbesserung der Messwerte nutzen.

Dabei kann die Messwertverbesserung eine Hintergrundausblendung zur Korrektur eines Einflusses von Hintergrundlicht umfassen. Als Hintergrundlicht wird hier solches Licht verstanden, das nicht von dem Messlichtstrahl herrührt. Dieses Licht kann beispielsweise durch eine Beleuchtung des Raums gebildet sein, in dem der Abstandssensor betrieben wird. Die Erfassung von Informationen für die Hintergrundausblendung würde dann ein Erfassen von Hintergrundlicht beinhalten, das den Detektor neben dem Messlichtstrahl beleuchtet. Zum Erfassen dieser Informationen kann der Beleuchtungslichtstrahl deaktiviert sein, wodurch gewährleistet ist, dass der Detektor ausschließlich durch Hintergrundlicht beleuchtet wird. Dabei kann zunächst ein Regeln der Belichtung vorgenommen werden und dann das Hintergrundlicht ermittelt werden.

Es gibt verschiedene Möglichkeiten, die Lehre der vorliegenden Erfindung in vorteilhafter Weise auszugestalten und weiterzubilden. Dazu ist einerseits auf die den nebengeordneten Ansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: ein Zeitdiagramm mit einem Verlauf einer Belichtung des Detektors während Phasen eines Messbetriebs,
- Fig. 2: ein Zeitdiagramm mit einem Verlauf einer Belichtung des Detektors mit zwei Phasen eines Messbetriebs und mehreren Zwischenmessungen, die in einer Messpause zwischen zwei Phasen eines Messbetriebs durchgeführt werden,
- Fig. 3: ein Blockdiagramm mit Funktionseinheiten eines Ausführungsbeispiels eines erfindungsgemäßen Abstandssensors,
- Fig. 4: ein Taktdiagramm mit einer Ausgestaltung des erfindungsgemäßen Verfahrens,
- Fig. 5: ein Diagramm mit der Intensität bei Detektorelementen des Detektors mit Hintergrundlicht und ohne Messlichtstrahl,
- Fig. 6: ein Diagramm mit der Intensität bei Detektorelementen des Detektors mit Hintergrundlicht und Messlichtstrahl und
- Fig. 7: ein Diagramm mit der Intensität bei Detektorelementen des Detektors mit Messlichtstrahl und bereinigt um das Hintergrundlicht.

Im Hinblick auf die Tatsache, dass in der Praxis selten die maximal mögliche Abtastrate (fₘₐₓ) eines Abstandssensors benötigt und auch genutzt wird, werden bei der vorliegenden Erfindung die Messpausen zwischen zwei Phasen eines Messbetriebs explizit für die Ausregelung des Detektorsignals genutzt.

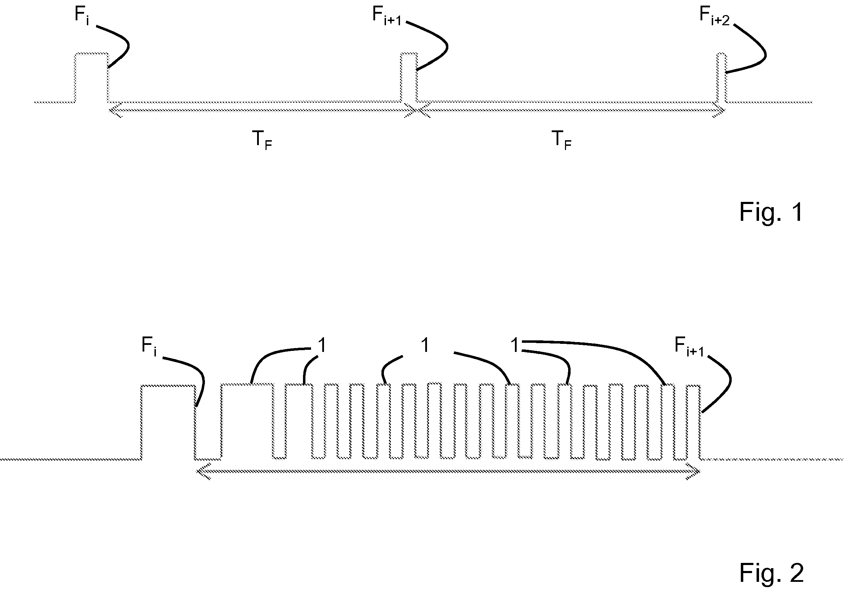

In Fig. 1 sind verschiedene Phasen eines Messbetriebs als "Fᵢ", "Fᵢ₊₁" und "Fᵢ₊₂" eingezeichnet, wobei i ein Index und üblicherweise eine ganze Zahl oder eine natürliche Zahl ist. Um den technischen Vorteil einer synchronen Abstandsmessung zu bieten, erfolgt in dieser Ausgestaltung die Belichtung des Detektors und die Verrechnung zu einem Abstandswert in einem Gleichtakt. Mit jeder fallenden Flanke wird der Detektor ausgelesen, sodass sich die fallenden Flanken jeweils in einem zeitlichen Abstand T_{F} befinden, wobei die damit erzielte Abtastrate f_{F} deutlich kleiner als die maximale Abtastrate fₘₐₓ ist. Entsprechend einer ermittelten Beleuchtungsdauer (Abstand zwischen steigender und fallender Flanke) wird der Belichtungsstart (also der Zeitpunkt einer steigenden Flanke) gewählt. Für sich gleichförmig bewegende Objekte entspricht diese Wahl dem Vorteil einer äquidistanten Messung.

In Messpausen zwischen den Phasen des Messbetriebs wird durch mehrere, idealerweise asynchrone Zwischenmessungen (Subframes) die optimale Belichtungsdauer ermittelt und nachgeregelt. In Fig. 2 sind zwischen einem "Fᵢ" und einem "Fᵢ₊₁" eine Vielzahl von Zwischenmessungen 1 (nämlich insgesamt 16 Zwischenmessungen) dargestellt, wobei der Übersichtlichkeit wegen lediglich einige mit Bezugszeichen versehen sind. Kommt es zu einer starken Änderung der Reflexionseigenschaft des Messobjektes, beispielsweise durch einen harten Kantenkontrast, so wirkt sich das Nachregeln der Belichtungsdauer zunächst nicht auf die ausgegebenen Abstandsmessergebnisse des Abstandssensors aus, da die Regelung mehrere (Zwischen-)Messungen Zeit hat, sich einzuschwingen.

In dem dargestellten Fall ist zu erkennen, dass die Belichtungsdauer bereits nach wenigen Zwischenmessungen einen konstanten Wert annimmt. Dies bedeutet, dass ab der vierten Zwischenmessung weitere Zwischenmessungen übersprungen werden können. Dabei könnte zumindest nach fünf übersprungenen Zwischenmessungen die Durchführung der Zwischenmessung erzwungen werden. Ferner wäre denkbar, dass die 16. oder die 15. und 16. Zwischenmessung auf jeden Fall durchgeführt werden. Dadurch würde selbst ein harter Kontrast direkt vor der eigentlichen Messung lediglich zu einem einzigen fehlerbehafteten Abstandsmesswert führen.

Damit ergibt sich der Vorteil gegenüber den bekannten Methoden einer statischen Messung mit lediglich reduzierter Messfrequenz und der Methode mit einer asynchronen Messung, dass die Belichtung zur Ermittlung des Abstandswertes, ein nahezu ideales Signal-zu-Rausch-Verhältnis (SNR) hat. Dies verschmälert vorteilhafterweise signifikant das Vertrauensintervall des ausgegebenen Messwertes, da statistische Ausreißer bei den ausgegeben Abstandsmesswerten aufgrund eines über- oder unterbelichteten Detektors deutlich reduziert werden können.

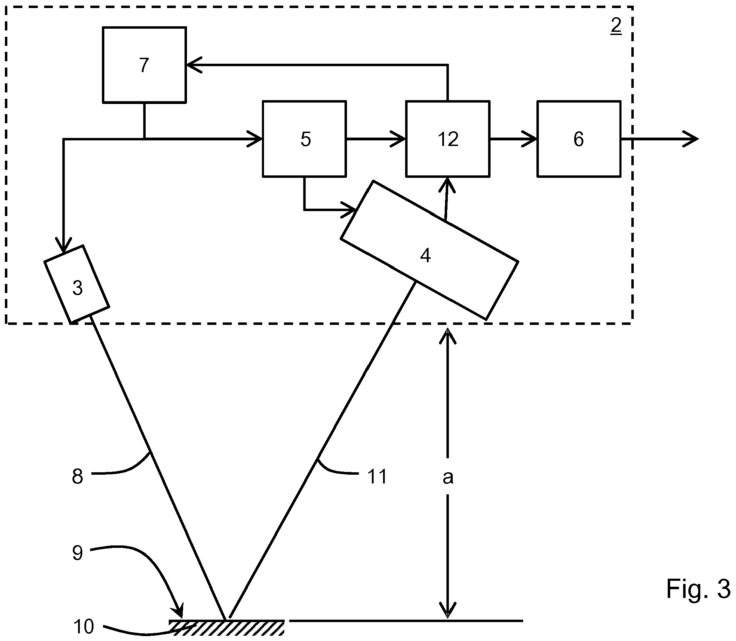

Fig. 3 zeigt ein Blockdiagram eines Ausführungsbeispiels eines erfindungsgemäßen Abstandssensors 2, der nach dem Triangulationsprinzip arbeitet. Der Abstandssensor 2 umfasst eine Lichtquelle 3, einen Detektor 4, eine Messsteuerung 5, eine Auswerteeinheit 6 und einen Regler 7. Die Lichtquelle 3 erzeugt einen Beleuchtungslichtstrahl 8, der auf eine Oberfläche 9 eines Messobjekts 10 gelenkt wird. Ein Messlichtstrahl 11 wird durch Reflexion des Beleuchtungslichtstrahls 8 an der Oberfläche 9 hervorgerufen. Der Messlichtstrahl 11 beleuchtet ein oder mehrere Detektorelemente (nicht dargestellt) des Detektors 4. Der Detektor 4 erfasst den Messlichtstrahl 11 und erzeugt einen Messwert, wobei der Messwert ein Vektor (bei einem Liniendetektor) / eine Matrix (bei einem Flächendetektor) aus mehreren Werten ist und jeder Eintrag des Vektors/der Matrix dem Messwert eines Detektorelements entspricht. Hierbei wird der Detektor durch die Messsteuerung 5 gesteuert, insbesondere bezüglich eines Belichtungsstarts und einer Belichtungsdauer. Idealerweise übernimmt die Messsteuerung die gesamte zeitliche Steuerung der Messung durch den Detektor 4.

Wenn der Detektor 4 einen Messwert erzeugt hat, wird dieser in einem Auslesespeicher 12 abgelegt. Auf Messwerte, die in dem Auslesespeicher 12 abgelegt sind, kann die Auswerteeinheit 6 und der Regler 7 zugreifen. Die Auswerteeinheit 6 nutzt diese Messwerte in einer Phase des Messbetriebs zum Ermitteln eines Abstands a zwischen dem Abstandssensor 2 und dem Messobjekt 10. Der Regler 7 ermittelt eine empfangene Lichtmenge, die während einer Belichtungsdauer durch den Detektor 4 erfasst worden ist. Der Regler 7 beeinflusst die Lichtquelle 3 und die Messsteuerung 5 derart, dass sich die empfangene Lichtmenge in einem Sollbereich befindet oder sich diesem Sollbereich annähert. Hierzu kann der Regler 7 über die Lichtquelle 3 die Intensität und die Pulsdauer der Beleuchtungslichtstrahls 8 beeinflussen und über die Messsteuerung 5 den Belichtungsstart und die Belichtungsdauer.

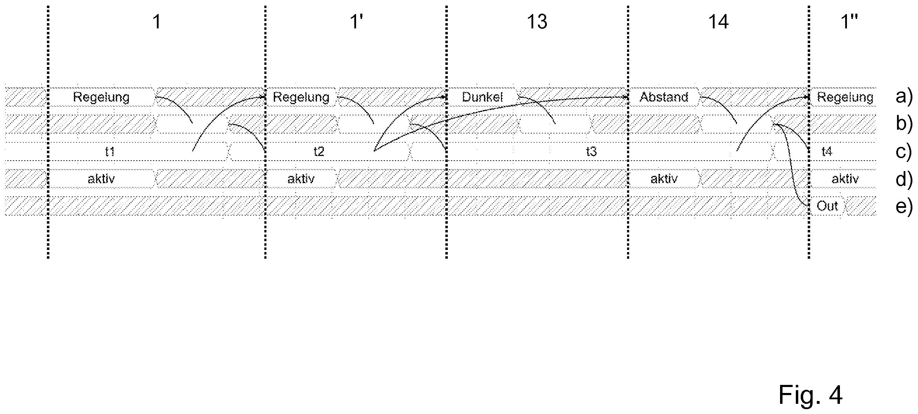

Fig. 4 zeigt ein Taktdiagramm mit einem Ausschnitt einer Ausgestaltung eines erfindungsgemäßen Verfahrens. Dargestellt sind zwei Zwischenmessungen 1, 1', eine Messung 13 von Informationen für eine Messwertverbesserung sowie eine Phase des Messbetriebs 14. In Teilfigur 4a ist das Belichten des Detektors 4, in Teilfigur 4b das Auslesen des Detektors 4, in Teilfigur 4c die Nutzung des Auslesespeichers 12, in Teilfigur 4d die Aktivität der Lichtquelle 3 und in Teilfigur 4e das Ausgeben eines ermittelten Abstandswertes a eingezeichnet.

Bei den Zwischenmessungen 1, 1' wird ein Beleuchtungslichtstrahl ausgesendet (Teilfigur 4d) und der Detektor belichtet (Teilfigur 4a). Am Ende der Belichtungsdauer wird der Beleuchtungslichtstrahl deaktiviert und die Belichtung des Detektors beendet. Der Detektor wird ausgelesen (Teilfigur 4b). Nach dem Auslesen wird der Inhalt des Auslesespeichers 12 aktualisiert. Dadurch wird bei Zwischenmessung 1 der Speicherinhalt von "t1" auf "t2" aktualisiert und bei Zwischenmessung 1' von "t2" auf "t3". Der jeweilige Speicherinhalt wird während der Zwischenmessung 1, 1' und während der Phase des Messbetriebs 14 zur Regelung der Belichtung genutzt, was mit Pfeilen von Teilfigur 4c zu Teilfigur 4a angedeutet ist.

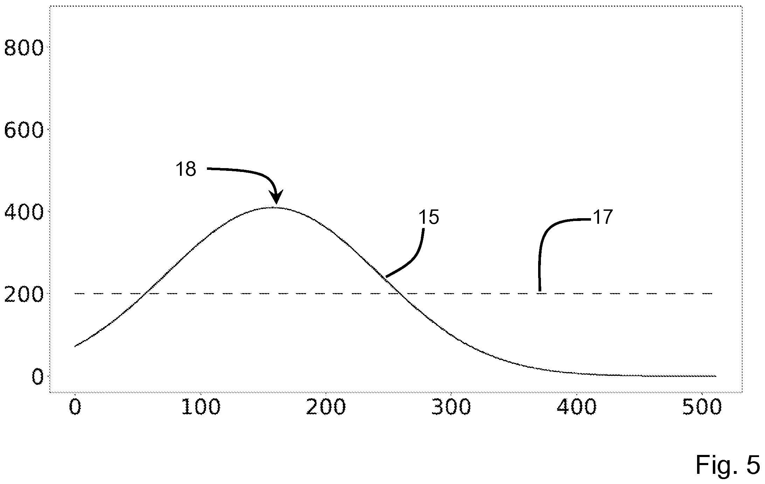

In dem Ausführungsbeispiel, das in Fig. 4 dargestellt ist, wird unmittelbar vor der Phase des Messbetriebs 14 eine Messung 13 für Messwertkorrekturen eingefügt. Während dieser Messung 13 ist der Beleuchtungslichtstrahl deaktiviert und die bei dem Detektor ankommende Lichtmenge wird ohne Messlichtstrahl erfasst. Dies bedeutet, dass der Detektor lediglich das Hintergrundlicht erfasst. Das auf dieser Weise erfasste Hintergrundlicht kann zur Messwertkorrektur verwendet werden, wie im Zusammenhang mit Fig. 5 bis 7 näher erläutert wird. Die erfassten Messwerte werden nicht in den Auslesespeicher übernommen, sondern direkt einer Helligkeitskalibrierung zugeführt.

Im Anschluss an die Messung 13 für Messwertkorrekturen wird in einer Phase des Messbetriebs 14 die eigentliche Abstandsmessung durchgeführt. Hierzu wird wiederum ein Beleuchtungslichtstrahl ausgesendet und der Detektor mit dem Messlichtstrahl beleuchtet. Nach dem Auslesen des Messwerts aus dem Detektor wird der Inhalt des Auslesespeichers von "t3" auf "t4" aktualisiert. Dieser Messwert wird durch die Auswerteeinheit 6 dazu genutzt, um einen Abstandswert a zu berechnen. Dieser berechnete Abstandswert a wird schließlich aus dem Abstandssensor ausgegeben (Teilfigur 4e). Gleichzeitig startet eine neue Zwischenmessung 1".

Figuren 5 bis 7 stellen beispielhafte Verläufe für eine Helligkeitskalibrierung dar. Alle Figuren zeigen Intensitätswerte, die über einem Pixel-Index aufgetragen sind. Dabei wird davon ausgegangen, dass der Detektor ein Liniendetektor ist und - in dem dargestellten Beispiel - 500 Detektorelemente (Pixel) aufweist.

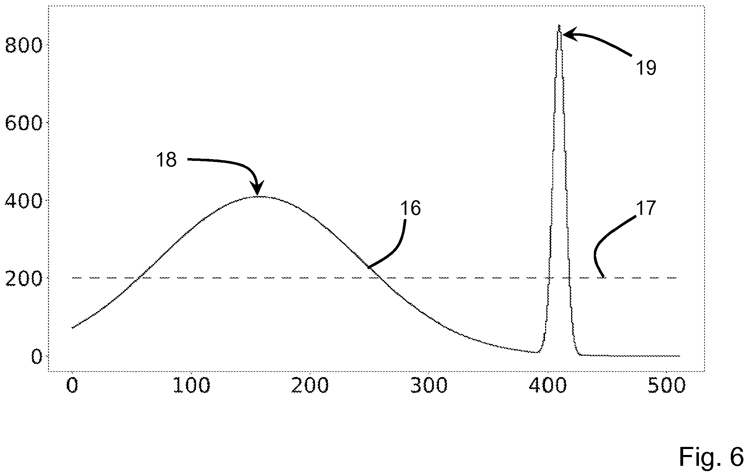

Fig. 5 zeigt einen Intensitätsverlauf 15 für Hintergrundlicht ohne einen Messlichtstrahl. Fig. 6 zeigt einen Intensitätsverlauf 16 für Hintergrundlicht und Messlichtstrahl. In beiden Figuren ist zudem ein Schwellwert 17 eingezeichnet, der bei dem Erkennen eines Auftreffpunkts des Messlichtstrahls auf dem Detektor mitwirkt. Es ist zu erkennen, dass sowohl durch das Hintergrundlicht ein Peak 18 oberhalb dieses Schwellwerts 17 tritt als auch ein Peak 19 durch den Messlichtstrahl. Daher ist eine Messwertkorrektur hilfreich.

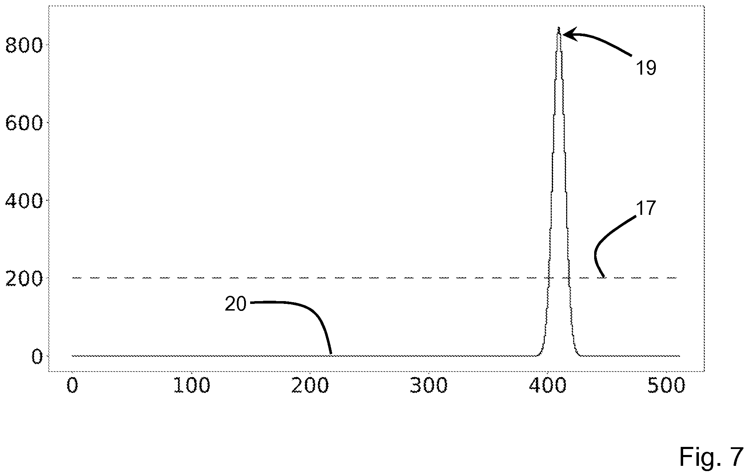

Während einer Messung 13 zum Gewinnen von Informationen für eine Messwertkorrektur kann die Intensitätsverteilung 15 gewonnen werden. Da der Beleuchtungslichtstrahl während der Messung 13 deaktiviert ist, muss das aufgesammelte Licht von dem Hintergrundlicht herrühren. Daher kann ein Intensitätsverlauf 16, der mit aktiviertem Beleuchtungslichtstrahl erfasst worden ist, durch Subtraktion des Intensitätsverlaufs 15 korrigiert werden. Hierdurch ergibt sich ein Intensitätsverlauf 20, wie er in Fig. 7 dargestellt ist. Bei dem bereinigten Intensitätsverlauf 20 tritt lediglich Peak 19 über den Schwellwert 17, sodass eindeutig für einen Auftreffpunkt des Messlichtstrahls auf dem Detektor entschieden werden kann. Damit ist eine Helligkeitskalibrierung erreicht.

Hinsichtlich weiterer vorteilhafter Ausgestaltungen wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1, 1', 1": Zwischenmessung
- 2: Abstandssensor
- 3: Lichtquelle
- 4: Detektor
- 5: Messsteuerung
- 6: Auswerteeinheit
- 7: Regler
- 8: Beleuchtungslichtstrahl
- 9: Oberfläche
- 10: Messobjekt
- 11: Messlichtstrahl
- 12: Auslesespeicher
- 13: Messung für Messwertkorrektur
- 14: Phase des Messbetriebs
- 15: Intensitätsverlauf für Hintergrundlicht
- 16: Intensitätsverlauf mit Messlichtstrahl
- 17: Schwellwert
- 18: Peak durch Hintergrundlicht
- 19: Peak durch Messlichtstrahl
- 20: Bereinigter Intensitätsverlauf

## Patentansprüche

1. Optischer Abstandssensor (2) mit Belichtungsregelung, umfassend:
eine Lichtquelle (3) zum Erzeugen eines Beleuchtungslichtstrahls (8) und zum Lenken des Beleuchtungslichtstrahls (8) auf ein Messobjekt (10),
einen Detektor (4) zum Erfassen eines durch Reflexion des Beleuchtungslichtstrahls (8) an dem Messobjekt (10) hervorgerufenen Messlichtstrahls (11),
eine Messsteuerung (5) zum Steuern des Detektors (4) bei einem Erfassen des Messlichtstrahls (11) und bei einem Auslesen von Messwerten,
eine Auswerteeinheit (6), die in einer Phase eines Messbetriebs (14) zum Auswerten von Messwerten des Detektors (4) zum Ermitteln eines Abstands (a) zwischen dem Abstandssensor (2) und dem Messobjekt (10) ausgebildet ist, und
einen Regler (7), der die Lichtquelle (3), den Detektor (4) und/oder die Messsteuerung (5) derart ansteuert, dass sich eine empfangene Lichtmenge, die während einer Belichtungsdauer von dem Detektor (4) oder von einem Teilbereich des Detektors (4) erfasst wird, in einem Sollbereich befindet oder sich diesem Sollbereich annähert,
wobei der Abstandssensor (2) dazu ausgebildet ist, sowohl in Phasen des Messbetriebs (14) als auch in zwischen den Phasen des Messbetriebs (14) ausgebildeten Messpausen einen Beleuchtungslichtstrahl (8) auszusenden und einen Messlichtstrahl (11) zu erfassen und mittels des Reglers (7) auszuwerten,
wobei der Abstandssensor (2) weiterhin dazu ausgebildet ist:
- zwischen zwei aufeinanderfolgenden Phasen eines Messbetriebs (14) mindestens eine Zwischenmessung (1, 1', 1") durchzuführen, wobei bei einer Zwischenmessung (1, 1', 1") ein Beleuchtungslichtstrahl (8) erzeugt und ein Messlichtstrahl (11) erfasst wird, ohne dass ein Abstandswert (a) ermittelt wird, wobei die bei einer Zwischenmessung ausgelesene Messwerte des Detektors lediglich für die Regelung der empfangenen Lichtmenge ausgewertet werden und nicht für das Ermitteln eines Abstands genutzt werden, und
- bei mehreren Zwischenmessungen (1, 1', 1") vor Durchführen einer möglichen Zwischenmessung (1, 1', 1") zu prüfen, ob eine durch den Regler (7) ermittelte Regeldifferenz oberhalb eines ersten Schwellwerts liegt und damit eine weitere Zwischenmessung (1, 1', 1") erforderlich ist oder ob eine durch den Regler (7) ermittelte Regeldifferenz unterhalb eines zweiten Schwellwerts liegt und damit eine weitere Zwischenmessung (1, 1', 1") entbehrlich ist.

2. Abstandssensor (2) nach Anspruch 1, **dadurch gekennzeichnet, dass** die Messsteuerung (5) dazu ausgebildet ist, ein Auslesen von Messwerten des Detektors (4) mit einem gleichbleibenden zeitlichen Abstand (T_{Frame}) zu veranlassen.

3. Abstandssensor (2) nach Anspruch 1 oder 2, **dadurch gekennzeichnet, dass** die Messsteuerung (3) dazu ausgebildet ist, abhängig von einer Belichtungsdauer einen Belichtungsstart festzulegen, bei dem ein Erfassen des Messlichtstrahls (11) gestartet wird.

4. Abstandssensor (2) nach einem der Ansprüche 1 bis 3, **dadurch gekennzeichnet, dass** der Regler (7) für das Regeln der empfangenen Lichtmenge dazu ausgebildet ist, die Intensität des Beleuchtungslichtstrahls (8), eine Impulsdauer des Beleuchtungslichtstrahls (8), einen Belichtungsstart des Detektors (4) und/oder die Belichtungsdauer des Detektors (4) zu beeinflussen.

5. Abstandssensor (2) nach einem der Ansprüche 1 bis 4, **dadurch gekennzeichnet, dass** der Abstandssensor (2) einen Auslesespeicher (12) umfasst, der zum Speichern ausgelesener Messwerte des Detektors (4) ausgebildet ist, wobei zwischen Detektor (4) und Auslesespeicher (12) ein Analog-Digital-Wandler angeordnet sein kann.

6. Abstandssensor (2) nach einem der Ansprüche 1 bis 5, **dadurch gekennzeichnet, dass** der Detektor (4) mehrere Detektorelemente umfasst, wobei die Detektorelemente vorzugsweise linienförmig oder flächig angeordnet sind und wobei ein Teilbereich, für den eine empfangene Lichtmenge ermittelt wird, durch ein Detektorelement gebildet sein kann.

7. Verfahren zum Regeln eines optischen Abstandssensors (2) nach einem der Ansprüche 1 bis 6, wobei der Abstandssensor (2) eine Lichtquelle (3) und einen Detektor (4) umfasst und wobei mittels des Abstandssensors (2) in Phasen eines Messbetriebs ein Abstand zu einem Messobjekt (10) ermittelt wird, umfassend die Schritte:
Erzeugen eines Beleuchtungslichtstrahls (8) durch die Lichtquelle (3) und Lenken des Beleuchtungslichtstrahls (3) auf ein Messobjekt (10),
Erfassen eines durch Reflexion des Beleuchtungslichtstrahls (8) an dem Messobjekt (10) hervorgerufenen Messlichtstrahls (11) mittels des Detektors (4),
Auslesen von Messwerten des Detektors (4), wobei das Auslesen durch eine Messsteuerung (5) gesteuert wird,
Ermitteln einer empfangenen Lichtmenge, die während einer Belichtungsdauer von dem Detektor (4) oder von einem Teilbereich des Detektors (4) erfasst wird,
wobei sowohl in Phasen des Messbetriebs (14) als auch in zwischen den Phasen des Messbetriebs (14) ausgebildeten Messpausen ein Beleuchtungslichtstrahl (8) erzeugt und auf das Messobjekt (10) gelenkt und ein Messlichtstrahl (11) erfasst und mittels eines Reglers (7) ausgewertet wird,
wobei die Lichtquelle (3), der Detektor (4) und/oder die Messsteuerung (5) mittels des Reglers (7) derart angesteuert wird/werden, dass sich die empfangene Lichtmenge in einem Sollbereich befindet oder sich dem Sollbereich annähert,
wobei zwischen zwei aufeinanderfolgenden Phasen eines Messbetriebs (14) mindestens eine Zwischenmessung (1, 1', 1") durchgeführt wird, wobei bei einer Zwischenmessung (1, 1', 1") ein Beleuchtungslichtstrahl (8) erzeugt und ein Messlichtstrahl (11) erfasst wird, ohne dass ein Abstandswert (a) ermittelt wird, wobei die bei einer Zwischenmessung ausgelesene Messwerte des Detektors lediglich für die Regelung der empfangenen Lichtmenge ausgewertet werden und nicht für das Ermitteln eines Abstands genutzt werden, und
wobei bei mehreren Zwischenmessungen (1, 1', 1") vor Durchführen einer möglichen Zwischenmessung (1, 1', 1") geprüft wird, ob eine durch den Regler (7) ermittelte Regeldifferenz oberhalb eines ersten Schwellwerts liegt und damit eine weitere Zwischenmessung (1, 1', 1") erforderlich ist oder ob eine durch den Regler (7) ermittelte Regeldifferenz unterhalb eines zweiten Schwellwerts liegt und damit eine weitere Zwischenmessung (1, 1', 1") entbehrlich ist.

8. Verfahren nach Anspruch 7, **dadurch gekennzeichnet, dass** zwischen zwei aufeinanderfolgenden Phasen des Messbetriebs (14) Informationen für eine Messwertverbesserung erfasst werden.

9. Verfahren nach Anspruch 8, **dadurch gekennzeichnet, dass** die Messwertverbesserung eine Hintergrundausblendung zur Korrektur eines Einflusses von Hintergrundlicht umfasst, wobei zur Erfassung von Informationen für die Hintergrundausblendung eine Belichtung des Detektors durch Hintergrundlicht erfolgt, vorzugsweise ohne aktiviertem Beleuchtungslichtstrahl.

## Claims

1. Optical distance sensor (2) having exposure control, comprising:
a light source (3) for producing an illumination light beam (8) and for directing the illumination light beam (8) onto a measurement object (10),
a detector (4) for detecting a measurement light beam (11) which is brought about by means of reflection of the illumination light beam (8) on the measurement object (10),
a measurement control unit (5) for controlling the detector (4) when the measurement light beam (11) is detected and when measurement values are read,
an evaluation unit (6) which is constructed in a phase of a measurement operation (14) to evaluate measurement values of the detector (4) in order to establish a spacing (a) between the distance sensor (2) and the measurement object (10) and
a controller (7) which controls the light source (3), the detector (4) and/or the measurement control unit (5) in such a manner that a quantity of light which is received and which is detected during a period of illumination by the detector (4) or is detected by a part-region of the detector (4) is located in a desired range or approaches this desired range,
wherein the distance sensor (2) is constructed both in phases of the measurement operation (14) and in measurement pauses which are formed between the phases of the measurement operation (14) to transmit an illumination light beam (8) and
to detect a measurement light beam (11) and to evaluate it by means of the controller (7),
wherein the distance sensor (2) is further constructed between two successive phases of a measurement operation (14) to carry out at least one intermediate measurement (1, 1', 1"), wherein during an intermediate measurement (1, 1', 1") an illumination light beam (8) is produced and a measurement light beam (11) is detected without a spacing value (a) being established, wherein the measurement values of the detector which are read during an intermediate measurement are evaluated only for the control of the quantity of light received and are not used to establish a spacing, and in the case of a plurality of intermediate measurements (1, 1', 1") before carrying out a possible intermediate measurement (1, 1', 1") to check whether a control difference which is established by the controller (7) is above a first threshold value and consequently an additional intermediate measurement (1, 1', 1") is required or whether a control difference which is established by the controller (7) is below a second threshold value and consequently an additional intermediate measurement (1, 1', 1") can be dispensed with.

2. Distance sensor (2) according to claim 1, **characterised in that** the measurement control unit (5) is constructed to bring about a reading of measurement values of the detector (4) with a consistent time interval (T_{Frame}).

3. Distance sensor (2) according to claim 1 or claim 2, **characterised in that** the measurement control unit (3) is constructed, depending on the duration of the illumination, to determine an exposure start at which a detection of the measurement light beam (11) is started.

4. Distance sensor (2) according to any one of claims 1 to 3, **characterised in that** the controller (7) for the control of the quantity of light received is constructed to influence the intensity of the illumination light beam (8), a pulse duration of the illumination light beam (8), an exposure start of the detector (4) and/or the illumination duration of the detector (4).

5. Distance sensor (2) according to any one of claims 1 to 4, **characterised in that** the distance sensor (2) comprises a read memory (12) which is constructed to store read measurement values of the detector (4), wherein an analogue/digital converter may be arranged between the detector (4) and the read memory (12).

6. Distance sensor (2) according to any one of claims 1 to 5, **characterised in that** the detector (4) comprises a plurality of detector elements, wherein the detector elements are preferably arranged in a linear or planar manner, and wherein a part-region for which a quantity of light received is established may be formed by a detector element.

7. Method for controlling an optical distance sensor (2) according to any one of claims 1 to 6, wherein the distance sensor (2) comprises a light source (3) and a detector (4) and wherein, by means of the distance sensor (2) in phases of a measurement operation, a spacing with respect to a measurement object (10) is established, comprising the steps of:
producing an illumination light beam (8) by the light source (3) and directing the illumination light beam (3) onto a measurement object (10),
detecting a measurement light beam (11) which is brought about by means of reflection of the illumination light beam (8) on the measurement object (10) by means of the detector (4),
reading measurement values of the detector (4), wherein the reading is controlled by a measurement control unit (5),
establishing a quantity of light received which is detected during an exposure time by the detector (4) or by a part-region of the detector (4),
wherein both in phases of the measurement operation (14) and in measurement pauses which are formed between the phases of the measurement operation (14) an exposure light beam (8) is produced and directed onto the measurement object (10) and a measurement light beam (11) is detected and evaluated by means of a controller (7),
wherein the light source (3), the detector (4) and/or the measurement control unit (5) is/are controlled by means of the controller (7) in such a manner that the quantity of light received is in a desired range or approaches the desired range, wherein between two successive phases of a measurement operation (14) at least one intermediate measurement (1, 1', 1") is carried out, wherein during an intermediate measurement (1, 1', 1") an illumination light beam (8) is produced and a measurement light beam (11) is detected without a spacing value (a) being established,
wherein the measurement values of the detector which are read during an intermediate measurement are evaluated only for the control of the quantity of light received and are not used to establish a spacing, and
wherein in the case of a plurality of intermediate measurements (1, 1', 1") before carrying out a possible intermediate measurement (1, 1', 1") it is checked whether a control difference which is established by the controller (7) is above a first threshold value and consequently an additional intermediate measurement (1, 1', 1") is required or whether a control difference which is established by the controller (7) is below a second threshold value and consequently an additional intermediate measurement (1, 1', 1") can be dispensed with.

8. Method according to claim 7, **characterised in that** between two successive phases of the measurement operation (14) information items for a measurement value improvement are detected.

9. Method according to claim 8, **characterised in that** the measurement value improvement comprises a background fading in order to correct an influence of background light, wherein, in order to detect information items for the background fading, an exposure of the detector using background light is carried out, preferably without an activated illumination light beam.

## Revendications

1. Capteur de distance optique (2) avec régulation d'éclairage, comprenant :
une source de lumière (3) pour la production d'un rayon de lumière d'éclairage (8) et pour la déviation du rayon de lumière d'éclairage (8) vers un objet à mesurer (10),
un détecteur (4) pour la détection d'un rayon de lumière de mesure (11) généré par la réflexion du rayon de lumière d'éclairage (8) sur l'objet à mesurer (10),
une commande de mesure (5) pour le contrôle du détecteur (4) lors d'une détection du rayon de lumière de mesure (11) et lors d'une lecture de valeurs de mesure,
une unité d'analyse (6) qui est conçue pour l'analyse, dans une phase d'un processus de mesure (14), de valeurs de mesure du détecteur (4) afin de déterminer une distance (a) entre le capteur de distance (2) et l'objet à mesurer (10) et
un régulateur (7), qui contrôle la source de lumière (3), le détecteur (4) et/ou la commande de mesure (5) de sorte qu'une quantité de lumière reçue, qui est détectée pendant une durée d'éclairage, par le détecteur (4) ou par une partie du détecteur (4), se trouve dans une zone de consigne ou s'approche de cette zone de consigne,
dans lequel le capteur de distance (2) est conçu pour émettre, aussi bien dans des phases du processus de mesure (14) que dans des pauses de mesure prévues entre les phases du processus de mesure (14), un rayon de lumière d'éclairage (8) et pour détecteur un rayon de lumière de mesure (11) et pour l'analyser au moyen du régulateur (7),
dans lequel le capteur de distance (2) est en outre conçu :
- pour effectuer, entre des phases successives d'un processus de mesure (14), au moins une mesure intermédiaire (1, 1', 1"), dans lequel, lors d'une mesure intermédiaire (1, 1', 1"), un rayon de lumière d'éclairage (8) est généré et un rayon de lumière de mesure (11) est détecté sans qu'une valeur de distance (a) soit déterminée, dans lequel les valeurs de mesure du détecteur, lues lors d'une mesure intermédiaire, sont utilisées uniquement pour la régulation de la quantité de lumière reçue et non pour la détermination d'une distance et
- lors de plusieurs mesures intermédiaires (1, 1', 1"), avant la réalisation d'une mesure intermédiaire (1, 1', 1") possible, pour vérifier si une différence de régulation déterminée par le régulateur (7) se trouve au-dessus d'une première valeur seuil et donc si une autre mesure intermédiaire (1, 1', 1") est nécessaire ou si une différence de régulation déterminée par le régulateur (7) se trouve en dessous d'une deuxième valeur seuil et donc si une autre mesure intermédiaire (1, 1', 1") n'est pas nécessaire.

2. Capteur de distance (2) selon la revendication 1, **caractérisé en ce que** la commande de mesure (5) est conçue pour permettre une lecture de valeurs de mesure du détecteur (4) avec un intervalle de temps constant (T_{Frame}).

3. Capteur de distance (2) selon la revendication 1 ou 2, **caractérisé en ce que** la commande de mesure (3) est conçue pour définir, en fonction d'une durée d'éclairage, un démarrage de l'éclairage, lors duquel une détection du rayon de lumière de mesure (11) est démarrée.

4. Capteur de distance (2) selon l'une des revendications 1 à 3, **caractérisé en ce que** le régulateur (7) pour la régulation de la quantité de lumière reçue est conçu pour influencer l'intensité du rayon de lumière d'éclairage (8), une durée d'impulsion du rayon de lumière d'éclairage (8), un démarrage d'éclairage du détecteur (4) et/ou la durée d'éclairage du détecteur (4).

5. Capteur de distance (2) selon l'une des revendications 1 à 4, **caractérisé en ce que** le capteur de distance (2) comprend une mémoire de lecture (12) qui est conçue pour enregistrer les valeurs de mesure lues du détecteur (4), dans lequel, entre le détecteur (4) et la mémoire de lecture (12), peut se trouver un convertisseur analogique-numérique.

6. Capteur de distance (2) selon l'une des revendications 1 à 5, **caractérisé en ce que** le détecteur (4) comprend plusieurs éléments de détecteur, dans lequel les éléments de détecteur sont disposés de préférence de manière linéaire ou de manière plane et dans lequel une partie, pour laquelle la quantité de lumière reçue est déterminée, peut être constituée d'un élément de détecteur.

7. Procédé de régulation d'un capteur de distance optique (2) selon l'une des revendications 1 à 6, dans lequel le capteur de distance (2) comprend une source de lumière (3) et un détecteur (4) et dans lequel, au moyen du capteur de distance (2), dans des phases d'un processus de mesure, une distance par rapport à un objet à mesurer (10) est déterminée, comprenant les étapes suivantes :
production d'un rayon de lumière d'éclairage (8) par la source de lumière (3) et déviation du rayon de lumière d'éclairage (3) vers un objet à mesurer (10),
détection d'un rayon de lumière de mesure (11) généré par la réflexion du rayon de lumière d'éclairage (8) sur l'objet à mesurer (10) au moyen du détecteur (4),
lecture de valeurs de mesure du détecteur (4), dans lequel la lecture est contrôlée par une commande de mesure (5),
détermination d'une quantité de lumière reçue qui est détectée pendant une durée d'éclairage par le détecteur (4) ou par une partie du détecteur (4),
dans lequel, aussi bien dans des phases du processus de mesure (14) que dans des pauses de mesure prévues entre les phases du processus de mesure (14), un rayon de lumière d'éclairage (8) est généré et dévié vers l'objet à mesurer (10) et un rayon de lumière de mesure (11) est détecté et analysé au moyen d'un régulateur (7),
dans lequel la source de lumière (3), le détecteur (4) et/ou la commande de mesure (5) sont contrôlés au moyen du régulateur (7) de sorte que la quantité de lumière reçue se trouve dans une zone de consigne ou s'approche de la zone de consigne,
dans lequel, entre deux phases successives d'un processus de mesure (14), au moins une mesure intermédiaire (1, 1', 1") est effectuée, dans lequel, lors d'une mesure intermédiaire (1, 1', 1"), un rayon de lumière d'éclairage (8) est généré et un rayon de lumière de mesure (11) est détecté sans qu'une valeur de distance (a) soit déterminée, dans lequel les valeurs de mesure du détecteur, lues lors d'une mesure intermédiaire, sont utilisées uniquement pour la régulation de la quantité de lumière reçue et non pour la détermination d'une distance et
dans lequel, lors de plusieurs mesures intermédiaires (1, 1', 1"), avant la réalisation d'une mesure intermédiaire (1, 1', 1") possible, il est vérifié si une différence de régulation déterminée par le régulateur (7) se trouve au-dessus d'une première valeur seuil et donc si une autre mesure intermédiaire (1, 1', 1") est nécessaire ou si une différence de régulation déterminée par le régulateur (7) se trouve en dessous d'une deuxième valeur seuil et donc si une autre mesure intermédiaire (1, 1', 1") n'est pas nécessaire.

8. Procédé selon la revendication 7, **caractérisé en ce que**, entre des phases successives du processus de mesure (14), des informations pour une amélioration des valeurs de mesure sont relevées.

9. Procédé selon la revendication 8, **caractérisé en ce que** l'amélioration des valeurs de mesure comprend un masquage de l'arrière-plan afin de corriger une influence de la lumière d'arrière-plan, dans lequel, pour le relevé des informations pour le masquage de l'arrière-plan, un éclairage du détecteur est effectué à l'aide d'une lumière d'arrière-plan, de préférence sans rayon de lumière d'éclairage activé.
